# EUROPÄISCHE PATENTSCHRIFT

(11) **EP 1 477 086 B1**
(45) Veröffentlichungstag und Bekanntmachung des Hinweises auf die Patenterteilung: **22.04.2009**
(21) Anmeldenummer: 04011131.2
(22) Anmeldetag: 11.05.2004
(51) Int. Cl.: A47C 20/04, F16H 25/20

(54) **Drehantrieb**
Rotary actuator
Actionneur rotatif

(30) Priorität: 14.05.2003 DE 10321807
(43) Veröffentlichungstag der Anmeldung: 17.11.2004
(73) Patentinhaber: OKIN Gesellschaft für Antriebstechnik mbH, 51645 Gummersbach (DE)
(72) Erfinder: Koch, Dietmar, 51645 Gummersbach (DE)
(74) Vertreter: Stachow, Ernst-Walther

(56) Entgegenhaltungen:
- FR-A- 614 654
- FR-A- 1 328 909
- FR-A- 2 584 790
- US-A- 5 117 701
- PATENT ABSTRACTS OF JAPAN Bd. 0081, Nr. 86 (M-320), 25. August 1984 (1984-08-25) -& JP 59 077162 A (HITACHI SEISAKUSHO KK), 2. Mai 1984 (1984-05-02)
- PATENT ABSTRACTS OF JAPAN Bd. 2002, Nr. 05, 3. Mai 2002 (2002-05-03) -& JP 2002 021965 A (CKD CORP), 23. Januar 2002 (2002-01-23)

## Beschreibung

Die Erfindung betrifft einen Drehantrieb, insbesondere für Möbel zur Relativbewegung eines Möbelteils zu einem anderen Möbelteil, mit einem Antriebsmotor und einer Antriebskraftübertragung, wobei die Antriebskraftübertragung eine durch den Antriebsmotor angetriebene Antriebsspindel und mindestens eine parallel beabstandet zur Antriebsspindel verlaufende Drehmomentübertragungsspindel zur Drehmomentumwandlung aufweist, die durch die Antriebsspindel über einen Bewegungsblock antreibbar ist, der in einer Gewindeverbindung mit den Spindeln steht sowie durch eine Führung relativ zu den Spindeln verdrehfest und in Längsrichtung der Spindeln verschiebbar gelagert ist, wobei die Spindeln jeweils durch eine Öffnung des Bewegungsblockes mit einem inneren Gewinde geführt sind, mit dem die jeweilige Spindel im Eingriff steht, die Antriebsspindel und die Drehmomentübertragungsspindel jeweils ein mindestens eingängiges Gewinde beide Gewinde eine unterschiedliche Ganghöhe aufweisen und der Bewegungsblock mindestens zwei Teile mit einer Teilungsebene aufweist.

Drehantriebe der eingangs genannten Art sind hinlänglich bekannt. Hierbei wird der relativ zu den beiden Spindeln verdrehfest und in einer Führung verschiebbar gelagerte Bewegungsblock über die mit dem Bewegungsblock in Gewindeverbindung stehende Antriebsspindel in der Führung verschoben, so dass die ebenfalls mit dem Bewegungsblock in Gewindeverbindung stehende Drehmomentübertragungsspindel durch die Verschiebung des Bewegungsblockes in eine Drehbewegung versetzt wird. Drehantriebe dieser Art weisen somit einen komplizierten Aufbau auf.

In der FR-A-2584790 wird ein Drehantrieb der eingangs genannten Art beschrieben. Hierbei weisen die beiden Teile aus Gründen der verdrehfesten Linearführung des Bewegungsblockes und des an die konzentrische Gesamtgeometrie des Antriebes angepassten Aufbaus einen sehr unterschiedlichen Querschnitt, einen rechtwinkligen bzw. einen nahezu kreisrunden Querschnitt, auf. Daher sind diese zweckmäßigerweise einzeln gefertigt und an der Teilungsfläche fest miteinander verbunden. Hierdurch ergibt sich jedoch ein komplizierter Aufbau des Drehantriebes, wodurch ein Zusammenbau oder Austausch einer der Spindel entsprechend aufwändig wird.

In den Druckschriften JP59077162 A und FR-A-1 328 909 wird der Aufbau des Drehantriebes dadurch vereinfacht, dass beide Teile des Bewegungsblockes einstückig ausgeführt sind und zur ihrer verdrehfesten Führung über einen Verfahrweg des Bewegungsblockes mindestens einer Führungsfläche zur Anlage an eine Linearführung aufweisen. Dennoch sind auch hier die Montage und Demontage aufwändig.

In der Druckschrift US005117701A wird ein konzentrischer Aufbau beider Spindeln mit dazwischen liegendem Bewegungsblock vorgeschlagen, wodurch der Drehantrieb zwar kompakter aber in Hinsicht auf Montage und Demontage sogar schwieriger wird.

Die der Erfindung zugrunde liegenden Aufgabe ist daher, einen Drehantrieb der eingangs genannten Art bereit zu stellen, der leichter montier- und demontierbar ist.

Die gestellte Aufgabe wird erfindungsgemäß dadurch gelöst, dass die Teilungsebene durch die Längsachse beider Öffnungen verläuft. Hierdurch wird zunächst der Zusammenbau des Drehantriebes erleichtert, indem die parallel geführten Spindeln von zwei einander gegenüberliegenden Seiten her von den Öffnungen der Spindeln umgreifbar sind. Hierdurch wird weiterhin eine eventuelle Austauschbarkeit der Spindeln erleichtert, da sich der Bewegungsblock dank seiner Teilung entsprechend leicht wieder von den Spindeln lösen lässt. Ferner ist die dieser Anordnung der Teilungsebene in Hinsicht auf die Übertragung der Kräfte durch den Bewegungsblock hindurch günstiger, da die Teilungsebene parallel zu den Hauptübertragungskräften verläuft.

Je nach Auslegung der unterschiedlichen Ganghöhen der Gewinde kann die Rotation der Drehmomentübertragungsspindel größer oder kleiner als die der Antriebsspindel sein, wobei über die Differenz zwischen den Gewindehöhen das übertragbare Drehmoment direkt einstellbar ist. Vorteilhaft hierbei ist im Vergleich zu einem üblichen Zahnradgetriebe die wenig komplexe, robuste und damit wenig störanfällige Bauweise mit wenigen zu bewegenden Teilen, wodurch auch die Geräuschentwicklung eingeschränkt ist.

Abhängig von der Art der Gewindepaarung kann zudem der Drehsinn der Rotation bei der Übertragung umgekehrt werden, d. h. wenn beispielsweise das Gewinde der Antriebsspindel ein Rechtsgewinde und das der Drehmomentübertragungsspindel ein Linksgewinde aufweist, oder gleichsinnig bleiben, d. h. wenn beide Spindeln beispielsweise ein Rechtsgewinde aufweisen. Ferner kann wenig aufwendig über die Größe des Gewindeabschnittes, mit dem der Bewegungsblock jeweils in Gewindeverbindung steht, eine stabile, kippsichere Verbindung geschaffen werden. Bei der Verwendung gegensinniger Gewinde wird der Bewegungsblock in Hinsicht auf die resultierenden Kraftmomente geringer belastet, da sich die Kraftmomente zum Teil aufheben.

In einer bevorzugten Ausbildung der Erfindung ist die Ganghöhe des Gewindes der Antriebsspindel kleiner als die Ganghöhe des Gewindes der Drehmomentübertragungsspindel ausgebildet. Hierdurch kann das übertragene Drehmoment vergrößert werden, indem gemäß den Hebelgesetzen bei einer gleichen durchlaufenen relativen Wegstrecke der Spindeln in dem Bewegungsblock gleichzeitig der von der Drehmomentübertragungsspindel ausgeführte Drehwinkel im Vergleich dem der Antriebsspindel entsprechend verringert ist.

Es wird als Vorteil angesehen, wenn hierbei insbesondere das Gewinde der Drehmomentübertragungsspindel als zweigängiges Gewinde ausgeführt ist. Dies ist besonders vorteilhaft bei großen Gewindehöhen der Drehmomentübertragungsspindel, die bei vielfacher Umdrehung der Antriebsspindel lediglich eine Teilumdrehung aufweisen, da hier der dadurch erhöhte Kraftangriff auf die Gewindeflanken der Drehmomentübertragungsspindel an zwei Stellen erfolgen kann. Hierdurch kann bei gleicher Kraftübertragung eine gegenüber einer eingängigen Drehmomentübertragungsspindel eine verkürzte Drehmomentübertragungsspindel eingesetzt werden, welche wiederum eine kompaktere Bauweise des Drehantriebes erlaubt. Bevorzugt sollten die beiden Gewinde der Drehmomentübertragungsspindel um 180° versetzt sein, damit der Kraftangriff des Bewegungsblockes an die Drehmomentübertragungsspindel gleichmäßig und symmetrisch erfolgen kann. Denkbar sind selbstverständlich auch höhergängige Gewinde.

Ebenfalls wird die Ausbildung zumindest des Gewindes der Drehmomentübertragungsspindel als trapezförmiges Gewinde als vorteilhaft angesehen, das sich durch seinen vergleichsweise einfachen und robusten Aufbau auszeichnet.

In einer weiteren Ausbildung kann das Gewinde der Drehmomentübertragungsspindel beispielsweise durch einen auf den Schaft der Drehmomentübertragungsspindel aufgeschweißten Draht gebildet werden, was einfach und kostengünstig erfolgen kann. Zur Ausbildung einer exakteren Gewindeform beispielsweise mit trapezförmigem Querschnitt kann der aufgeschweißte Draht z.B. durch Überrollen oder Anschleifen nachgearbeitet werde. In umgekehrter Weise kann das Gewinde nicht aufgesetzt, sondern in den Schaft der jeweiligen Spindel beispielsweise durch Einrollen eingearbeitet werden, so dass entsprechende Nuten an der äußeren Oberfläche und, bei einer Hohlspindel mit genügend geringer Wandstärke, zusätzlich entsprechende Gewindegänge an der Innenseite der Hohlspindel entstehen.

In einer Weiterbildung der Erfindung ist der Drehantrieb durch eine Fixiervorrichtung zur Fixierung der beiden Teile des Bewegungsblockes zueinander gekennzeichnet. Bevorzugt weist die Fixiervorrichtung mindestens einen Fixierstift auf, der von einem Teil des Bewegungsblockes über die Teilungsebene hinweg in den anderen Teil des Bewegungsblockes hineinragt. Dieser Fixierstift kann beispielsweise als Steckstift oder als Gewindestift bzw. als Schraube ausgeführt sein. Hierdurch wird ein Verschieben beider Teile gegeneinander und eine hieraus resultierende verminderte Verschiebbarkeit des Bewegungsblockes vermieden.

Bevorzugt wird eine Weiterbildung der Erfindung, in der die Führung als ein nicht kreisrundes Profil ausgebildet ist, das der Außenkontur des Bewegungsblocks angepasst ist, den Bewegungsblock zumindest teilweise umschließt und zumindest mit den Enden fest mit dem Gehäuseteil des Drehantriebs verbunden ist. Hierbei kann das Profil beispielsweise rund in Form eines Ovals oder eckig als Rechteck oder Vieleck ausgebildet sein.

Selbstverständlich fallen auch andere Profilformen innerhalb des Bereiches der Erfindung, welche gewährleisten, dass der Bewegungsblock verdrehfest und verschiebbar in der Führung gelagert ist. In einer Weiterbildung kann das Profil zusätzlich nach innen gerichtete Führungsrippen zur Führung des Bewegungsblockes aufweisen, wobei der Bewegungsblock entsprechend ausgelegte Nuten aufweist, in die die Führungsrippen eingreifen können.

In einer anderen Ausbildung der Erfindung sind die Spindeln in Form einer äußeren Hohlspindel und einer inneren Spindel koaxial zueinander angeordnet. Ferner ist der Bewegungsblock in Form eines Hohlzylinders zwischen und koaxial zu den Spindeln vorgesehen. Hierbei ist das Gewinde der äußeren Spindel als Innengewinde und das Gewinde der inneren Spindel als Außengewinde ausgeführt. Ferner weist der Bewegungsblock ein in das Innengewinde der äußeren Spindel eingreifendes Außengewinde und ein in das Außengewinde der inneren Spindel eingreifendes Innengewinde

In einer Weiterbildung der Erfindung ist der Drehantrieb durch eine Fixiervorrichtung zur Fixierung der beiden Teile des Bewegungsblockes zueinander gekennzeichnet. Bevorzugt weist die Fixiervorrichtung mindestens einen Fixierstift auf, der von einem Teil des Bewegungsblockes über die Teilungsebene hinweg in den anderen Teil des Bewegungsblockes hineinragt. Dieser Fixierstift kann beispielsweise als Steckstift oder als Gewindestift bzw. als Schraube ausgeführt sein. Hierdurch wird ein Verschieben beider Teile gegeneinander und eine hieraus resultierende verminderte Verschiebbarkeit des Bewegungsblockes vermieden.

Bevorzugt wird eine Weiterbildung der Erfindung, in der die Führung als ein nicht kreisrundes Profil ausgebildet ist, das der Außenkontur des Bewegungsblocks angepasst ist, den Bewegungsblock zumindest teilweise umschließt und zumindest mit den Enden fest mit dem Gehäuseteil des Drehantriebs verbunden ist. Hierbei kann das Profil beispielsweise rund in Form eines Ovals oder eckig als Rechteck oder Vieleck ausgebildet sein. Selbstverständlich fallen auch andere Profilformen innerhalb des Bereiches der Erfindung, welche gewährleisten, dass der Bewegungsblock verdrehfest und verschiebbar in der Führung gelagert ist. In einer Weiterbildung kann das Profil zusätzlich nach innen gerichtete Führungsrippen zur Führung des Bewegungsblockes aufweisen, wobei der Bewegungsblock entsprechend ausgelegte Nuten aufweist, in die die Führungsrippen eingreifen können.

In einer anderen Ausbildung der Erfindung sind die Spindeln in Form einer äußeren Hohlspindel und einer inneren Spindel koaxial zueinander angeordnet. Ferner ist der Bewegungsblock in Form eines Hohlzylinders zwischen und koaxial zu den Spindeln vorgesehen. Hierbei ist das Gewinde der äußeren Spindel als Innengewinde und das Gewinde der inneren Spindel als Außengewinde ausgeführt. Ferner weist der Bewegungsblock ein in das Innengewinde der äußeren Spindel eingreifendes Außengewinde und ein in das Außengewinde der inneren Spindel eingreifendes Innengewinde auf. Hiermit wird ein koaxialer Aufbau der Antriebskraftübertragung mit einer Innenspindel und einer Außenspindel sowie mit einem dazwischen gelagerten Bewegungsblock vorgeschlagen. Durch diesen koaxialen Aufbau ist die Antriebskraftübertragung besonders kompakt ausbildbar und wirkungsvoll gegen Verschmutzungen von außen geschützt. Selbstverständlich ist denkbar, dass die innere Spindel als Drehmoment Übertragungsspindel und die äußere Spindel als Antriebsspindel ausgeführt ist.

In einer Weiterbildung weist die Führung dieser koaxialen Antriebskraftübertragung mindestens einen Profilstab auf, der parallel beabstandet zur Längsachse durch eine entsprechend ausgebildete Öffnung durch den Bewegungsblock geführt ist und dessen zumindest eine Ende fest mit Gehäuseteilen des Drehantriebes verbunden ist und somit ein Verdrehen des Bewegungsblockes und der Spindeln gegenüber den Gehäuseteilen verhindert.

Bevorzugt weist der Profilstab mindestens eine sich in Verformungsrichtung erstreckende Verstärkungsrippe auf. Hierdurch wird die Biegesteifigkeit des Profilstabes in Verformungsrichtung entsprechend erhöht. Dies soll verhindern, dass sich der Profilstab in Richtung der Verformungsrichtung durchbiegt, und dadurch eine Verschiebung des Bewegungsblocks auf den Profilstab erschwert. Besonders bevorzugt ist der Profilstab als Hohlzylinder mit zwei Verstärkungsrippen ausgeführt, die sich in Einbaulage bezüglich der gemeinsamen Längsachse des koaxialen Aufbaus an dem nach innen gewandten Teil des Zylindermantels angebracht sind, sich von diesem beidseitig und umfänglich in einem Abschnitt um die koaxiale Längsachse herum erstrecken und somit mit dem Hohlzylinder des Profilstabes einen spiegelsymmetrischen Aufbau bilden, wobei die Spiegelebene in Einbaulage durch die Längsachse des Profilstabes sowie durch die gemeinsame koaxiale Längsachse geht. Bevorzugt sind in diesem Aufbau zwei Profilstäbe eingebaut, die in dem Bewegungsblock gegenüberliegend angeordnet sind. Zweckmäßigerweise ist das Innengewinde der äußeren Spindel durch Eindrücken des Zylindermantels von außen nach innen eingebracht.

In einer Weiterbildung weist die Antriebskraftübertragung ein Kupplungselement auf, über das die Drehmomentübertragungsspindel mit einem zu drehenden Teil verbunden ist. Dieses Kupplungselement wird in dem Ausführungsbeispiel näher beschrieben.

Bevorzugt weist der Bewegungsblock in einer Weiterbildung der Erfindung mindestens einen Sensor zur Begrenzung des Verschiebungsweges des Bewegungsblocks auf. Hierdurch wird der Verschiebungsweg zumindest zu einer Seite hin begrenzt, in dem er beispielsweise über den Sensor einen Endschalter zur Abschaltung des Drehmotors betätigt.

Denkbar ist zudem, dass der Bewegungsblock beziehungsweise die Antriebskraftübertragung eine Sicherungsvorrichtung aufweist, die verhindert, dass die Antriebskraftübertragung zumindest zu einer Seite hin bei einer Blockade des durch den Drehantrieb zu drehenden Teiles unterbrochen wird. Dies ist insbesondere bei Übertragung großer Drehmomente notwendig, um zu verhindern, dass beispielsweise beim Absenken eines Kopfteiles eines Lattenrostes ein zwischen Kopfteil und Lattenrostrahmen geratenes Teil durch ein für das Verschwenken des Kopfteiles notwendig hohes Drehmoment eingeklemmt und damit beschädigt oder zerquetscht wird.

Die vorliegende Erfindung wird anhand zweier Ausführungsbeispiele sowie dreier Anwendungsbeispiele mit einer zugehörigen Zeichnung erläutert. In der Zeichnung zeigen
- Fig. 1: eine Seitenansicht eines Drehantriebes mit parallel beabstandeten Spindeln und mit seitlich geöffnetem Gehäuse,
- Fig. 2: eine Aufsicht des Drehantriebes mit einem oben geöffneten Gehäuse und einem horizontal geschnittenen Bewegungsblock,
- Fig. 3: eine Schnittdarstellung gemäß dem in Fig. 2 eingezeichneten Schnittverlauf A-A, jedoch mit ungeteiltem Bewegungsblock,
- Fig. 4: eine Querschnittsdarstellung des Drehantriebes gemäß dem Schnittverlauf A-A in Fig. 2, jedoch mit zweigängigem Gewinde,
- Fig. 5: eine Querschnittsdarstellung des Querschnittverlaufes A-A gemäß Fig. 2, jedoch mit geteiltem Bewegungsblock, Fixierstiften und zweigängigem Gewinde,
- Fig. 6: eine Seitenansicht eines Drehantriebes mit koaxialem Aufbau der Spindeln,
- Fig. 7: einen vertikalen Längsschnitt durch den Drehantrieb mit koaxialem Aufbau,
- Fig. 8: einen Querschnitt des Drehantriebes gemäß dem in Fig. 6 eingezeichneten Schnittverlauf B-B,
- Fig. 9: eine Seitenansicht eines Lattenrostes mit erfindungsgemäßem Drehantrieb und verschwenktem Kopfteil,
- Fig. 10: eine Seitenansicht des Lattenrostes mit unverschwenktem Kopfteil,
- Fig. 11: eine vergrößerte Seitenansicht gemäß Fig. 10, jedoch mit verkürztem Fußteil,
- Fig. 12: eine Schnittdarstellung des Lattenrostes gemäß dem Schnittverlauf C-C in Fig. 11,
- Fig. 13: eine Aufsicht auf den Lattenrost mit oben geöffnetem Drehantrieb und horizontal geschnittenem Bewegungsblock,
- Fig. 14: einen Ausschnitt D aus Fig. 13,
- Fig. 15: eine Seitenansicht eines Hubtisches mit erfindungsgemäßem Drehantrieb,
- Fig. 16: eine Schnittansicht des Hubtisches gemäß dem Schnittverlauf E in Fig. 15,
- Fig. 17: einen Teilschnitt des Hubtisches gemäß dem Schnittverlauf F in Fig. 16,
- Fig. 18: eine Vergrößerung des in Fig. 17 gezeigten Teilschnittes F,
- Fig. 19: eine Vorderansicht eines Schwenktores mit erfindungsgemäßem Drehantrieb,
- Fig. 20: eine Seitenansicht des Schwenktores und
- Fig. 21: eine Seitenansicht des Schwenktores, jedoch mit hochgeschwenktem Torflügel.

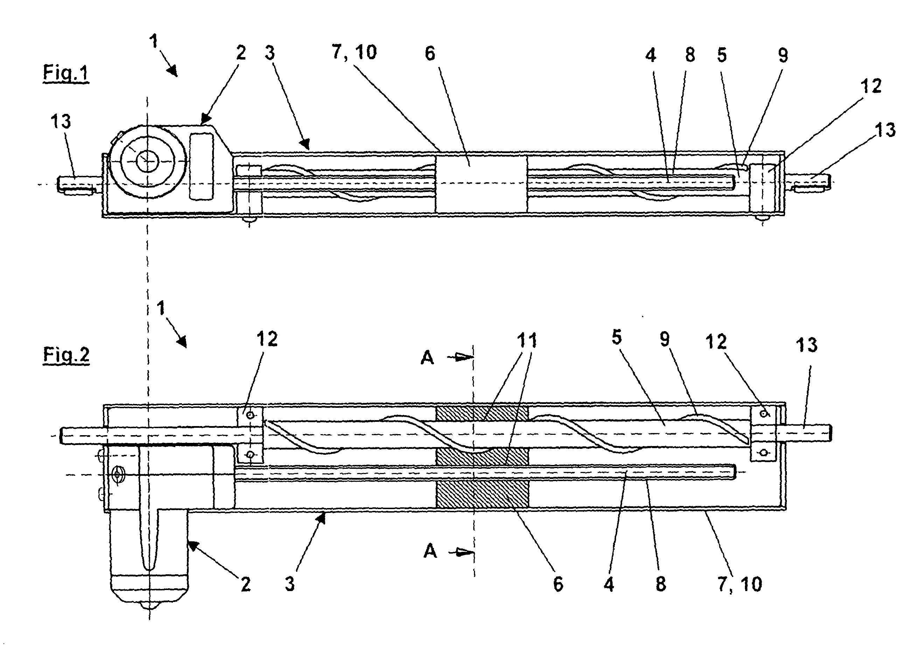

In den Figuren 1 bis 8 werden zwei Ausführungsbeispiele eines Drehantriebes 1 mit einem Antriebsmotor 2 und einer Antriebskraftübertragung 3 gezeigt. Die Antriebskraftübertragung 3 weist eine durch den Antriebsmotor 2 angetriebene Antriebsspindel 4 und eine parallel zur Antriebsspindel 4 verlaufende Drehmomentübertragungsspindel 5 zur Drehmomentumwandlung auf. Die Drehmomentübertragungsspindel 5 ist durch die Antriebsspindel 4 über einen Bewegungsblock 6 antreibbar, der in einer Gewindeverbindung mit den Spindeln 4, 5 steht sowie durch eine Führung 7 relativ zu den Spindeln 4, 5 verdrehfest und in Längsrichtung der Spindeln 4, 5 verschiebbar gelagert ist. Hierbei ist die Antriebsspindel 4 mit einem hier nur angedeutet dargestellten eingängigen Gewinde 8 versehen, während die Drehmomentübertragungsspindel 5 jeweils ein in ein- bzw. zweigängiges Gewinde 9 aufweist, wobei die Ganghöhe des Gewindes 8 der Antriebsspindel 4 kleiner als die Ganghöhe des Gewindes 9 der Drehmomentübertragungsspindel 5 ausgebildet ist. Der Drehantrieb weist ferner ein Gehäuse 10 auf. Nicht gezeigt in den Figuren sind Sensoren, die in Form von Endschaltern den Verschiebungsweg des Bewegungsblocks begrenzen sollen.

Die Figuren 1 bis 5 zeigen das erste Ausführungsbeispiel des Drehantriebes 1, in dem die Spindeln 4, 5 parallel beabstandet zueinander angeordnet sind, wobei die Spindeln 4, 5 jeweils durch eine Öffnung 11 des Bewegungsblockes 6 mit einem hier nicht detailliert dargestellten Innengewinde geführt sind, mit dem die jeweilige Spindel 4, 5 in Eingriff steht.

In Fig. 1 bzw. in Fig. 2 ist der Drehantrieb 1 in Seitenansicht bzw. in Aufsicht dargestellt, wobei zur besseren Sicht auf die Antriebskraftübertragung 3 jeweils Teile des Gehäuses 10 entfernt gezeichnet sind. Die Antriebsspindel 4 erstreckt sich vom Antriebsmotor 2 durch die Öffnung 11 des Bewegungsblocks 6, während die ebenfalls durch den Bewegungsblock 6 geführte Drehmomentübertragungsspindel 5 beidseitig in Lagern 12 gelagert ist, und sich darüber hinaus mit Kupplungselementen 13 zur Ankopplung an zu bewegende Teile beidseitig aus dem Gehäuse 10 erstreckt.

Wie deutlich in den Figuren 1 und 2 ersichtlich, weist die Drehmomentübertragungsspindel 5 ein eingängiges Gewinde 9 auf, das mit einer wesentlich größeren Ganghöhe als das Gewinde 8 der Antriebsspindel 4 ausgebildet ist, wobei zur Vereinfachung der Zeichnung in der Zeichnung selbst keine zeichnerischen Angaben zur Ganghöhe der Antriebsspindel 4 gemacht sind. Hier sind aber alle Ganghöhen denkbar, die, im Falle einer Vergrößerung des Drehmomentes durch die Antriebskraftübertragung 3, kleiner als die Ganghöhe des Gewindes der Drehmomentübertragungsspindel 5 ausgelegt sind. Wird der Bewegungsblock 6 durch die Antriebsspindel 4 über die gesamte Länge der Drehmomentübertragungsspindel 5 bewegt, so führt in dem hier gezeigten Beispiel die Drehmomentübertragungsspindel 5 eine etwa dreifache Umdrehung aus, während die Antriebsspindel 4 ein Vielfaches der dreifachen Umdrehung durchläuft, so dass hierdurch gemäß den Hebelgesetzen auf die Drehmomentübertragungsspindel 5 ein entsprechend größeres Drehmoment übertragbar ist. Selbstverständlich ist auch eine Umkehrung dieses Prinzips denkbar, indem die Antriebsspindel ein Gewinde mit größerer Ganghöhe aufweist als das der Drehmomentübertragungsspindel, so dass das übertragbare Drehmoment durch die Antriebskraftübertragung bei gleichzeitiger Erhöhung des übertragenen Drehwinkels vermindert wird.

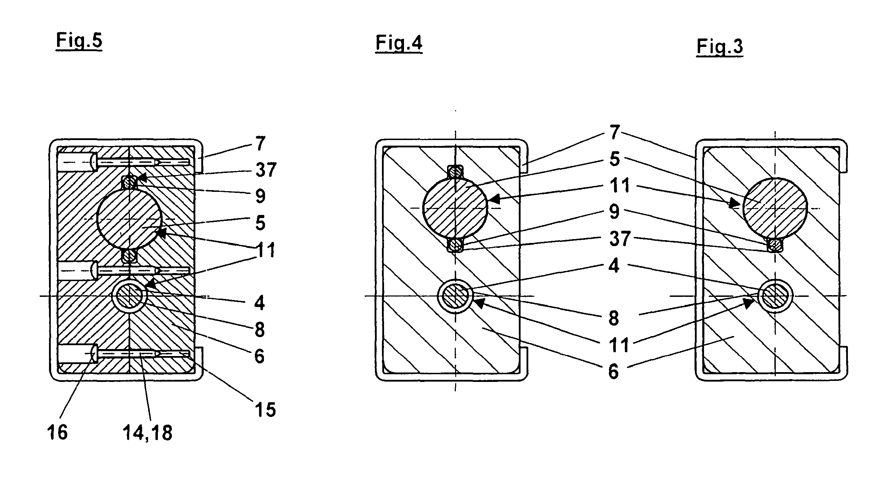

In den Figuren 3 bis 5 ist jeweils in verschiedenen Ausführungsvarianten eine Querschnittsdarstellung des Bewegungsblocks 6 zusammen mit den Spindeln 4, 5 und dem Gehäuse 10 gezeigt, wobei die Querschnittsdarstellung in Fig. 3 dem Schnittverlauf A-A in Fig. 2 entspricht. In Fig. 3 weist die Drehmomentübertragungsspindel 5 ein in ein inneres Gewinde 37 des Bewegungsblockes eingreifendes eingängiges Gewinde 9 auf, während das in das innere Gewinde 37 des Bewegungsblocks 6 eingreifende Gewinde 9 der Drehmomentübertragungsspindel 5 in den Figuren 4 und 5 zweigängig ausgeführt ist. Der Bewegungsblock 6 ist in den Figuren 3 und 4 ungeteilt, während der Bewegungsblock 6 in Fig. 5 zwei Teile aufweist, wobei die Teilungsebene durch die Längsachse beider Öffnungen 11 verläuft. Zur Fixierung der beiden Teile des Bewegungsblocks 6 ist eine Fixiervorrichtung vorgesehen, die in dieser Schnittebene dieses Ausführungsbeispieles 3 Fixierstifte 14 aufweist, die durch Queröffnungen 15 von einem Teil des Bewegungsblocks 6 über die Teilungsebene hinweg den anderen Teil des Bewegungsblocks 6 hineinragen. Der in Fig. 5 gezeigte Kopf des Fixierstiftes 14 ist hierbei zweckmäßigerweise in den Bewegungsblock hineinversenkt. Die Fixierstifte 14 sind in diesem Beispiel als Schrauben 18 ausgeführt, die die beiden Teile des Bewegungsblockes 6 lösbar miteinander verbinden.

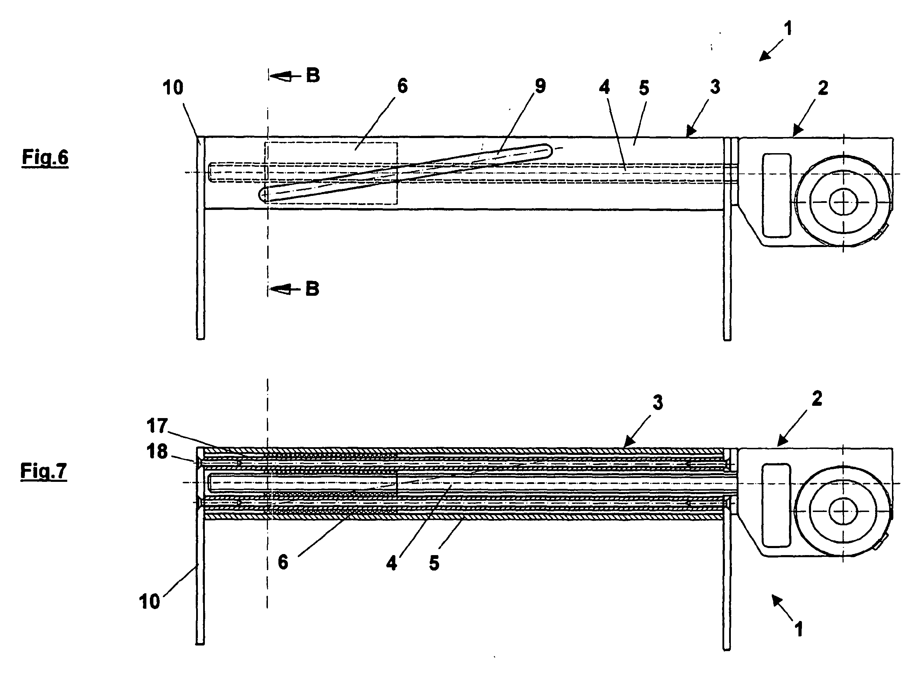

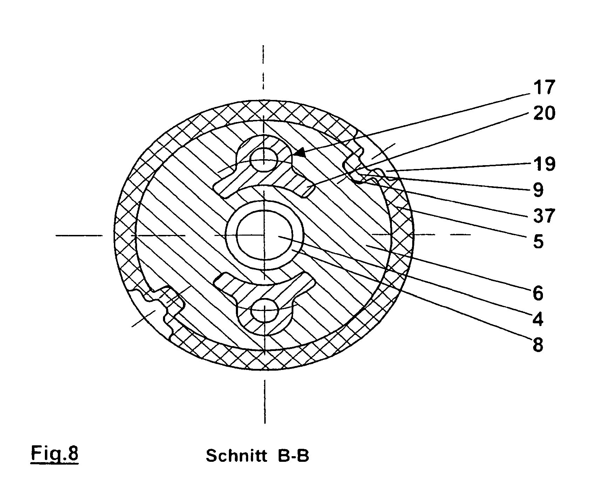

Die Figuren 6 bis 8 zeigen das zweite Ausführungsbeispiel des Drehantriebes 1, das einen koaxialen Aufbau der Antriebskraftübertragung 3 aufweist. Hierbei ist die Drehmomentübertragungsspindel 5 in Form einer äußeren Hohlspindel, die Antriebsspindel 4 in Form einer inneren Spindel und der Bewegungsblock 6 in Form eines Hohlzylinders zwischen und koaxial zu den Spindeln 4, 5 angeordnet. Ferner ist das Gewinde 9 der Drehmomentübertragungsspindel 5 als Innengewinde und das Gewinde 8 der Antriebsspindel 4 als Außengewinde ausgeführt. Der Bewegungsblock 6 weist ein äußeres Gewinde 37 auf, mit dem er in das Gewinde 9 der Drehmomentübertragungsspindel 5 eingreift, und ein hier nicht detailliert dargestelltes Innengewinde auf, mit dem er in das Gewinde 8 der Antriebsspindel 4 eingreift. Somit sind die Spindeln 4, 5 über den Bewegungsblock 6 verbunden. Wie in dem ersten Ausführungsbeispiel, so ist der Bewegungsblock auch in diesem Ausführungsbeispiel innerhalb eines Gehäuseabschnittes verschiebbar und verdrehfest gelagert, indem als Führung 7 zwei Profilstäbe 17 vorgesehen sind, die parallel beabstandet zur Längsachse durch den Bewegungsblock 6 geführt sind und deren Enden fest mit Gehäuse 10 des Drehantriebes 1 verbunden ist. In dem hier dargestellten Ausführungsbeispiel sind zwei Profilstäbe einander gegenüberliegend angeordnet. Sie sind als Hohlzylindern ausgeführt, die an beiden Enden mit dem Gehäuse 10 über Schrauben 18 verbunden sind. In Fig. 8 ist ein Querschnitt gemäß dem in Fig. 6 gezeigten Schnittverlauf B-B gezeigt, der die in diesem Beispiel vorgeschlagene genaue Profilform der Profilstäbe 17 wiedergibt. Hiernach weisen die Profilstäbe zwei sich in umfänglicher Richtung, d. h. in zu erwartender maximaler Formungsrichtung, erstreckende Verstärkungsrippen 20 auf, wodurch eine die Verschiebung des Bewegungsblockes 6 zumindest erschwerende Durchbiegung der Profilstäbe 17 verhindert wird. Wie ferner aus Fig. 8 ersichtlich, ist das Innengewinde der Drehmomentübertragungsspindel 5 als zweigängiges Gewinde 9 ausgeführt, das in einer hier beispielhaft angegebenen Fertigungsweise durch äußeres Eindrücken der hohlzylindrischen Drehmomentübertragungsspindel 5 erfolgte, so dass entsprechende Nuten 19 an der äußeren Oberfläche der Drehmomentübertragungsspindel 5 entstanden sind.

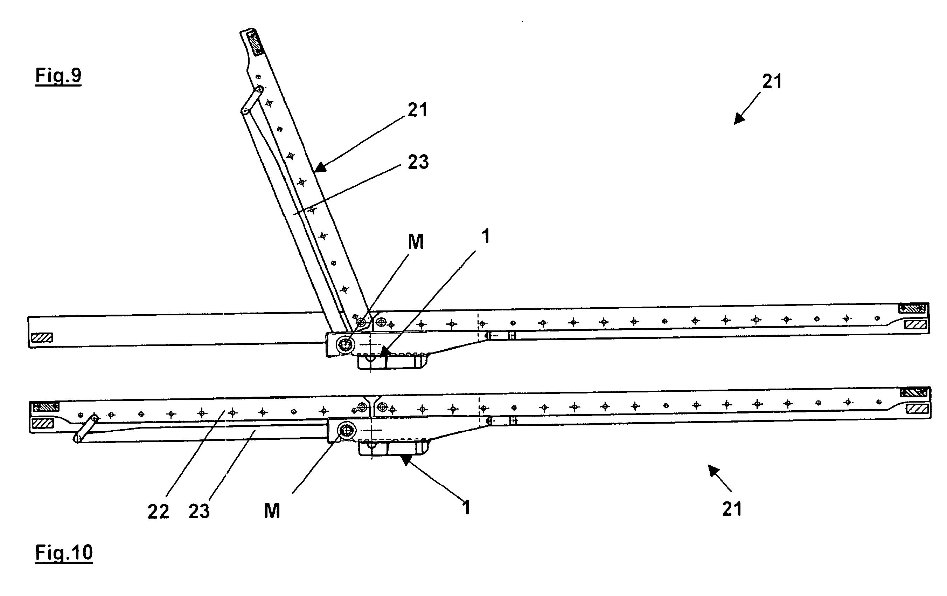

In den Figuren 9 bis 13 wird ein Lattenrost 21 mit einem erfindungsgemäßen Drehantrieb 1 mit parallel beabstandeten Spindeln 4,5 wiedergegeben, welcher über einen Querholm 28 an dem Lattenrost 21 befestigt ist. Jeweils in Seitenansicht zeigt Fig. 9 den Lattenrost 21 mit einem hochgeklappten Kopfteil 22, während Fig. 10 den Lattenrost 21 mit heruntergeklapptem Kopfteil 22 wiedergibt. Das Kopfteil 22 wird über ein Gestänge 23 über den Drehpunkt M verschwenkt. Wie aus Fig. 9 und 10 ersichtlich, ist zum Verschwenken des Kopfteiles 22 wegen der ungünstigen Hebelverhältnisse ein sehr großes Drehmoment erforderlich, welches durch den neuartigen Drehantrieb 1 geleistet wird. Hierdurch ist aber eine sehr flache Bauweise des Lattenrostes möglich, welche durch die flache Ausbildung des erfindungsgemäßen Drehantriebes 1 mit seiner langgestreckten Antriebskraftübertragung 3 weiter unterstützt wird. Somit ist ein derartiger Lattenrost in flache Bettrahmen einbaubar. Ferner erhält beispielsweise ein übliches Patientenbett mit einem derartigen Lattenrost 21 entsprechend eine vorteilhaft hohe Bodenfreiheit, die beispielsweise zur Unterbringung anderer Aggregate und einen freieren Zugang von Versorgungsleitungen ermöglicht.

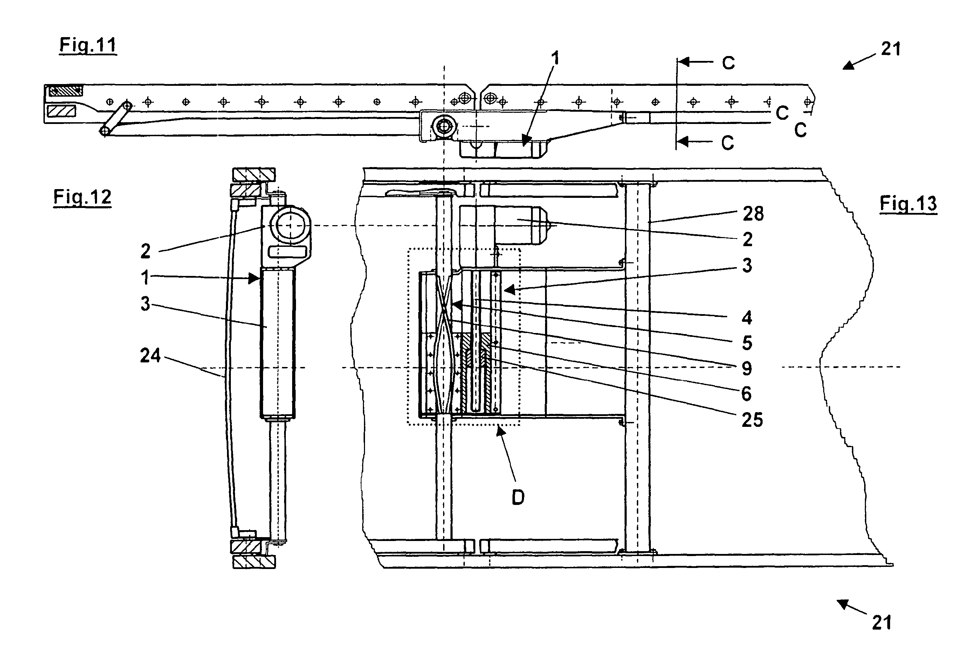

Fig. 11 zeigt einen Ausschnitt aus Fig. 10 mit dem entsprechend vergrößertem Kopfteil 22 und dem Drehantrieb 1. In Fig. 12 ist eine Querschnittsansicht gemäß dem in Fig. 11 dargestelltem Querschnittsverlauf C-C mit querliegenden Latten 24 des Lattenrostes 21 und dem querliegenden Drehantrieb 1 gezeigt. Hieran wird wiederum die besonders flache Bauweise deutlich, die dank des neuartigen Drehantriebes 1 möglich ist. In Fig. 13 ist ein Ausschnitt des Lattenrostes 21 ohne Latten im Bereich des Drehantriebes 1 gezeigt. Hierbei ist zur besseren Ansicht in dem Bereich der Drehmomentübertragungsspindel der Gehäusedeckel des Bewegungsblockes 6 entfernt, so dass hier die parallel beabstandete Anordnung der Spindeln 4,5 deutlich wird. Ferner ist in dem Bereich der Antriebsspindel 4 der Bewegungsblock 6 horizontal in einer Schnittebene geschnitten, die durch die Längsachsen beider Öffnungen 11 führt.

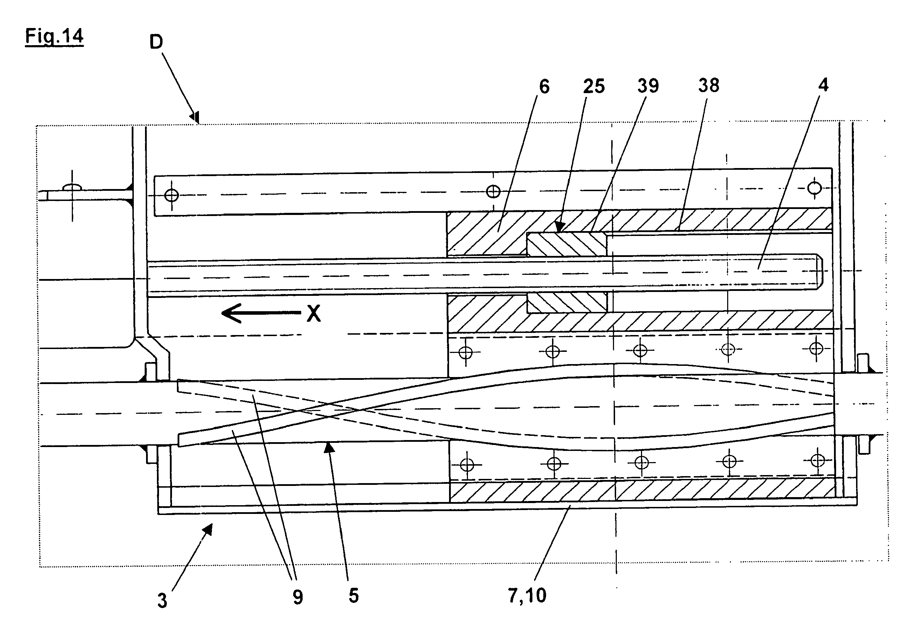

In Fig. 14 ist ein Ausschnitt D aus Fig. 13 mit der geöffneten Antriebskraftübertragung 3 gezeigt. Hierbei weist die Drehmomentübertragungsspindel 5 ein zweigängiges Gewinde 9 mit ca. 70° Umdrehungswinkel auf. Die Antriebsspindel 4 ist in der Öffnung 11 des Bewegungsblockes 6 ohne Gewindeeingriff verschiebbar gelagert. Über die Antriebsspindel 4 ist jedoch zusätzlich eine Muffe 25 geführt, die sich jedoch in Gewindeverbindung mit der Antriebsspindel befindet. Diese Muffe 25 ist ihrerseits innerhalb eines erweiterten Öffnungsbereiches des Bewegungsblockes 6 verschiebbar geführt und liegt in der hier gezeigten Position mit ihrer Stirnseite an dem Bewegungsblock 6 an. Ferner ist die Muffe durch eine Nut/Feder-Verbindung gegen ein Verdrehen in dem Bewegungsblock gesichert, indem, wie beispielhaft in diesem Ausführungsbeispiel wiedergegeben, der Bewegungsblock 6 in der in Fig. 14 dargestellten Teilungsebene eine Längsnut 38 aufweist, in die eine entsprechend ausgebildete Feder 39 an der Außenseite der Muffe 25 eingreift. Hierdurch wird erreicht, dass der Bewegungsblock 6 lediglich in eine Kraftübertragungsrichtung X durch die durch die Antriebsspindel 4 angetriebene Muffe 24 verschiebbar ist, da die Muffe 24 in Gegenrichtung zur Kraftübertragungsrichtung X lediglich an dem Bewegungsblock abgleitet, ohne auf diesen Kraft zu übertragen. Hierbei ist vorgesehen, dass bei einer Bewegung des Bewegungsblockes 6 in Kraftübertragungsrichtung X das Kopfteil 22 hochgeklappt, während es beim Herunterklappen über sein Eigengewicht soweit den Bewegungsblock 6 in Gegenrichtung zur Kraftübertragungsrichtung X vorwärts bewegt, wie die Muffe 24 durch die Antriebsspindel 4 in Gegenrichtung zur Kraftübertragungsrichtung X bewegt wurde.

Dies dient als Sicherungsmaßnahme, um zu verhindern, dass ein zwischen Kopfteil 22 und Lattenrost 21 geratenes Teil durch das Herunterklappen des Kopfteiles 22 mit dem für das Hochklappen des Kopfteiles 22 gewünscht hohen Drehmoment eingeklemmt und eventuell sogar zerquetscht wird. Wie hier nicht in den Zeichnungen näher dargestellt, befinden sich zweckmäßigerweise an den Enden des Bewegungsweges des Bewegungsblockes 6 sowie der Muffe 25 Weggeber, die ein Abschalten des Drehantriebes 1 mit Erreichen dieser jeweilig vorgesehen Position bewirken.

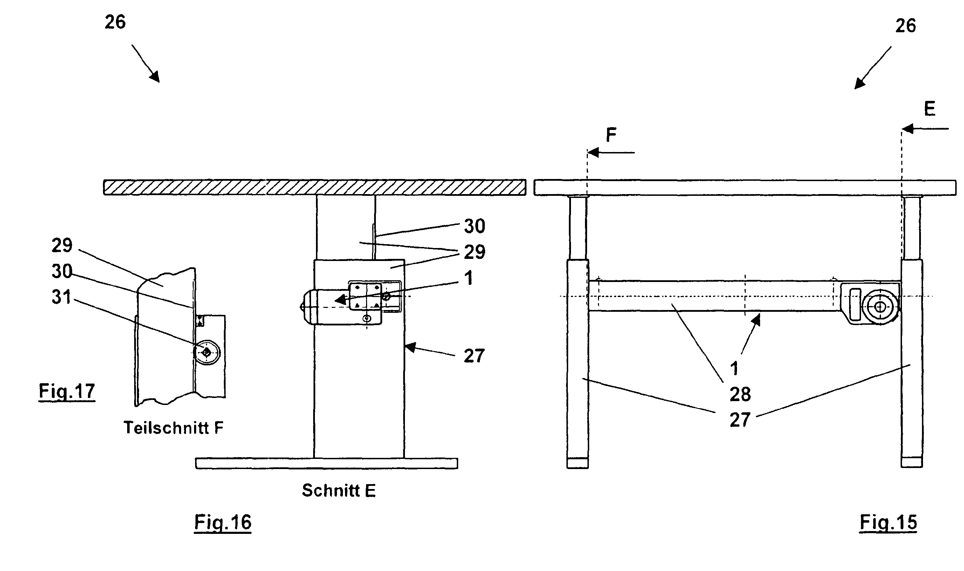

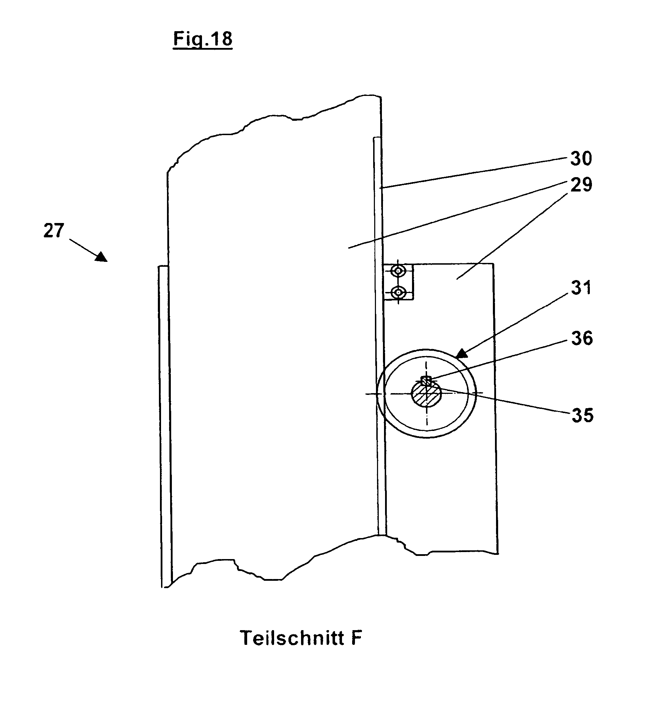

Die Figuren 15 bis 17 zeigen ein weiteres Beispiel in Form eines Hubtisches 26 mit zwei Hubsäulen 27 und einen Querholm 28. An dem Querholm 28 ist der erfindungsgemäße Drehantrieb 1 angebracht, der über ein Kupplungselement 13 die Hubsäulen 27 antreibt. Die Figuren 16 bis 18 zeigen weitere erläuternde Schnitte des Hubtisches 26 gemäß dem in Fig. 15 gezeigten Schnittverlauf F und E. Hiernach weist die Hubsäule 27 zwei ineinander verschiebbare Zylinder 29 auf, wobei, wie insbesondere in Fig. 18 ersichtlich, der innere Zylinder 29 an seiner Mantelfläche eine senkrechte Zahnstange 30 aufweist, in die ein Zahnrad 31 eingreift. Dieses Zahnrad 31 ist in diesem Ausführungsbeispiel über ein Kupplungselement 13 mit der Drehmomentübertragungsspindel 5 durch eine Verbindung durch Nut 35 und Feder 36 verdrehfest verbunden. Hierdurch wird die Drehbewegung der Drehmomentübertragungsspindel 5 mit dem hohen Drehmoment in eine Linearbewegung mit entsprechend hoher Bewegungskraft übertragen.

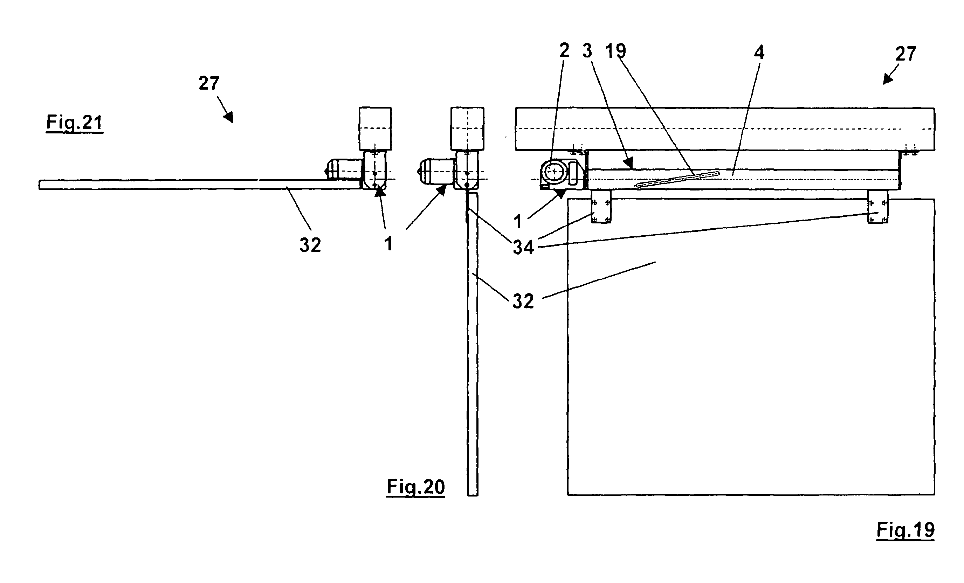

In den Figuren 19 bis 21 wird ein drittes Anwendungsbeispiel gezeigt, in dem der Drehantrieb 1 zum Verschwenken einer großen Platte in Form eines Schwenktores 32 eingesetzt wird. Der Drehantrieb weist hierbei beispielhaft einen koaxialen Aufbau auf, wodurch an der Außenseite der Drehmomentübertragungsspindel die oben beschriebene Nut 19 sichtbar ist. Die Drehmomentübertragungsspindel 5 ist hierbei über Laschen 33 als Kupplungselement 13 an das Schwenktor 32 gekoppelt. Fig. 19 zeigt diese Anordnung in Vorderansicht, Fig. 20 in Seitenansicht und Fig. 21 ebenfalls in Seitenansicht, jedoch mit hochgeklapptem Schwenktor 32.

### Bezugszeichenliste

- 1.: Drehantrieb
- 2.: Antriebsmotor
- 3.: Antriebskraftübertragung
- 4.: Antriebsspindel
- 5.: Drehmomentübertragungsspindel
- 6.: Bewegungsblock
- 7.: Führung
- 8.: Gewinde
- 9.: Gewinde
- 10.: Gehäuse
- 11.: Öffnung
- 12.: Lager
- 13.: Kupplungselement
- 14.: Fixierstift
- 15.: Queröffnung
- 16.: Kopf
- 17.: Profilstab
- 18.: Schraube
- 19.: Nut
- 20.: Verstärkungsrippe
- 21.: Lattenrost
- 22.: Kopfteil
- 23.: Gestänge
- 24.: Latte
- 25.: Muffe
- 26.: Hubtisch
- 27.: Hubsäule
- 28.: Querholm
- 29.: Zylinder
- 30.: Zahnstange
- 31.: Zahnrad
- 32.: Torflügel
- 33.: Schwenktor
- 34.: Lasche
- 35.: Nut
- 36.: Feder
- 37.: Gewinde
- 38.: Längsnut
- 39.: Feder

- M: Drehpunkt
- X: Kraftübertragungsrichtung
- D: Ausschnitt

## Patentansprüche

1. Drehantrieb (1), insbesondere für Möbel zur Relativbewegung eines Möbelteils zu einem anderen Möbelteil, mit einem Antriebsmotor (2) und einer Antriebskraftübertragung (3), wobei die Antriebskraftübertragung (3) eine durch den Antriebsmotor (2) angetriebene Antriebsspindel (4) und mindestens eine parallel beabstandet zur Antriebsspindel (4) verlaufende Drehmomentübertragungsspindel (5) zur Drehmomentumwandlung aufweist, die durch die Antriebsspindel (4) über einen Bewegungsblock (6) antreibbar ist, der in einer Gewindeverbindung mit den Spindeln (4, 5) steht sowie durch eine Führung (7) relativ zu den Spindeln (4, 5) verdrehfest und in Längsrichtung der Spindeln (4, 5) verschiebbar gelagert ist, wobei die Spindeln (4, 5) jeweils durch eine Öffnung (11) des Bewegungsblockes (6) mit einem inneren Gewinde (37) geführt sind, mit dem die jeweilige Spindel (4, 5) im Eingriff steht, die Antriebsspindel (4) und die Drehmomentübertragungsspindel (5) jeweils ein mindestens eingängiges Gewinde (8, 9), beide Gewinde (8, 9) eine unterschiedliche Ganghöhe aufweisen und der Bewegungsblock (6) mindestens zwei Teile mit einer Teilungsebene aufweist **dadurch gekennzeichnet, dass** die Teilungsebene durch die Längsachse beider Öffnungen (11) verläuft.

2. Drehantrieb nach Anspruch 1, **dadurch gekennzeichnet,** da s s die Ganghöhe des Gewindes (8) der Antriebsspindel (4) kleiner als die Ganghöhe des Gewindes (9) der Drehmomentübertragungsspindel (5) ausgebildet ist.

3. Drehantrieb nach Anspruch 1 oder 2 **gekennzeichnet durch** eine Fixiervorrichtung zur Fixierung der beiden Teile des Bewegungsblockes (6) zueinander.

4. Drehantrieb nach Anspruch 3, **dadurch gekennzeichnet, dass** die Fixiervorrichtung mindestens einen Fixierstift aufweist, der von einem Teil des Bewegungsblockes (6) über die Teilungsebene hinweg in den anderen Teil des Bewegungsblockes hineinragt.

5. Drehantrieb nach einem der Ansprüche 1 bis 4, **dadurch gekennzeichnet, dass** die Führung (7) als ein nichtkreisrundes Profil ausgebildet ist, das der Außenkontur des Bewegungsblocks (6) angepasst ist, den Bewegungsblock (6) zumindest teilweise umschließt und zumindest mit den Enden fest mit einem Gehäuseteil des Drehantriebes (1) verbunden ist.

6. Drehantrieb nach einem der Ansprüche 1 bis 5, **dadurch gekennzeichnet, dass** die Spindeln (4,5) in Form einer äußeren Hohlspindel und einer inneren Spindel koaxial zueinander angeordnet sind und dass der Bewegungsblock (6) in Form eines Hohlzylinders zwischen und koaxial zu den Spindeln (4,5) vorgesehen ist, wobei das Gewinde der äußeren Hohlspindel als Innengewinde und das Gewinde der inneren Spindel als Außengewinde ausgeführt ist und wobei der Bewegungsblock (6) ein in das Innengewinde der äußeren Spindel eingreifendes Außengewinde und ein in das Außengewinde der inneren Spindel eingreifendes Innengewinde aufweist.

7. Drehantrieb nach Anspruch 6, **dadurch gekennzeichnet, dass** die Führung (7) mindestens einen Profilstab (17) aufweist, der parallel beabstandet zur Längsachse durch den Bewegungsblock (6) geführt ist und dessen zumindest eine Ende fest mit Gehäuseteilen des Drehantriebes (1) verbunden ist.

8. Drehantrieb nach Anspruch 7, **dadurch gekennzeichnet, dass** der Profilstab (17) mindest eine sich in Verformungsrichtung erstreckende Verstärkungsrippe (20) aufweist.

9. Drehantrieb nach einem der Ansprüche 1 bis 8, **dadurch gekennzeichnet, dass** die Antriebskraftübertragung (3) ein Kupplungselement (13) aufweist, über das die Drehmomentübertragungsspindel (5) mit einem zu drehenden Teil verbunden ist.

10. Drehantrieb nach einem der Ansprüche 1 bis 9, **dadurch gekennzeichnet, dass** der Bewegungsblock (6) mindestens einen Sensor zur Begrenzung des Verschiebungsweges des Bewegungsblocks (6) aufweist.

## Claims

1. Rotary actuator (1), particularly for furniture, for moving one furniture part relative to another furniture part, comprising a drive motor (2) and a motive power transmission unit (3), where the motive power transmission unit (3) displays a drive spindle (4), driven by the drive motor (2), and at least one torque transmission spindle (5) for torque conversion, which runs parallel to, and at a distance from, the drive spindle (4) and can be driven by the drive spindle (4) via a movement block (6), which is connected to the spindles (4, 5) by threads and is mounted by a guide (7) in nonrotating fashion relative to the spindles (4, 5) and in sliding fashion in the longitudinal direction of the spindles (4, 5), where the spindles (4, 5) are each guided through an opening (11) in the movement block (6) with an internal thread (37) that is engaged by the respective spindle (4, 5), the drive spindle (4) and the torque transmission spindle (5) each display an at least single thread (8, 9), the two threads (8, 9) display different leads, and the movement block (6) displays at least two parts with a parting plane, **characterised in that** the parting plane runs through the longitudinal axis of the two openings (11).

2. Rotary actuator according to Claim 1, **characterised in that** the lead of the thread (8) of the drive spindle (4) is designed to be smaller than the lead of the thread (9) of the torque transmission spindle (5).

3. Rotary actuator according to Claim 1 or 2, **characterised by** a fixing device for fixing the two parts of the movement block (6) in place relative to each other.

4. Rotary actuator according to Claim 3, **characterised in that** the fixing device displays at least one fixing pin, projecting from one part of the movement block (6), across the parting plane and into the other part of the movement block.

5. Rotary actuator according to one of Claims 1 to 4, **characterised in that** the guide (7) is designed as a non-circular section that is adapted to the outer contour of the movement block (6), at least partially encloses the movement block (6), and at least the ends of which are rigidly connected to a housing part of the rotary actuator (1).

6. Rotary actuator according to one of Claims 1 to 5, **characterised in that** the spindles (4, 5) are arranged coaxially to each other in the form of an outer hollow spindle and an inner spindle, and **in that** the movement block (6) is provided, in the form of a hollow cylinder, between and coaxially to the spindles (4, 5), where the thread of the outer hollow spindle is designed as an internal thread and the thread of the inner spindle as an external thread, and where the movement block (6) displays an external thread engaging the internal thread of the outer spindle and an internal thread engaging the external thread of the inner spindle.

7. Rotary actuator according to Claim 6, **characterised in that** the guide (7) displays at least one profile rod (17), which is guided through the movement block (6) parallel to, and at a distance from, the longitudinal axis, and at least one end of which is rigidly connected to housing parts of the rotary actuator (1).

8. Rotary actuator according to Claim 7, **characterised in that** the profile rod (17) displays at least one reinforcing rib (20), extending in the direction of deformation.

9. Rotary actuator according to one of Claims 1 to 8, **characterised in that** the motive power transmission unit (3) displays a coupling element (13), via which the torque transmission spindle (5) is connected to a part to be rotated.

10. Rotary actuator according to one of Claims 1 to 9, **characterised in that** the movement block (6) displays at least one sensor for limiting the sliding travel of the movement block (6).

## Revendications

1. Actionneur rotatif (1), en particulier pour meubles et pour le mouvement relatif d'un meuble par rapport à un autre meuble, ledit actionneur comportant un moteur d'entraînement (2) et une transmission de la force motrice (3), ladite transmission de la force motrice (3) comportant une bielle de commande (4) entraînée par le moteur d'entraînement (2) et au moins une bielle de transmission de couple (5) pour la conversion de couple, ladite bielle de transmission de couple s'étendant parallèlement à et écartée de la bielle de commande (4) et étant agencée pour être commandée de la bielle de commande (4) par un bloc de mouvement (6) qui se trouve en une connexion taraudée avec les bielles (4, 5) et est supportée fixe en rotation par rapport aux bielles (4, 5) au moyen d'un guide (7) et de manière mobile en la direction longitudinale des bielles (4, 5), chacune des bielles (4, 5) étant passée au travers d'une orifice (11) du bloc de mouvement (6) ayant un filet intérieur (37), avec lequel la bielle respective (4, 5) est en prise, la bielle de commande (4) et la bielle de transmission de couple (5) chacune ayant un filet d'au moins à pas simple (8, 9), les deux filets (8, 9) ayant un pas différent et le bloc de mouvement (6) comportant d'au moins deux parties avec un plan de joint, **caractérisé en ce que** le plan de joint s'étend à travers de l'axe longitudinal des deux orifices (11).

2. Actionneur rotatif selon la revendication 1, **caractérisé en ce que** le pas du filet (8) de la bielle de commande (4) est inférieur au pas du filet (9) de la bielle de transmission de couple.

3. Actionneur rotatif selon la revendication 1 ou 2, **caractérisé par** un moyen de fixation pour fixer les deux parties du bloc de mouvement (6) l'un par rapport à l'autre.

4. Actionneur rotatif selon la revendication 3, **caractérisé en ce que** le moyen de fixation comporte d'au moins une goupille de fixation qui avance de l'une partie du bloc de mouvement (6) dans l'autre partie du bloc de mouvement par-dessus le plan de joint.

5. Actionneur rotatif selon l'une des revendications 1 à 4, **caractérisé e**n ce que le guide (7) est en forme d'une section pas circulaire qui est adaptée au contour extérieur du bloc de mouvement (6) et qui entoure le bloc de mouvement (6) au moins en partie et est relié de manière fixe à une partie d'une boîte du actionneur rotatif (1) d'au moins par ses extrémités.

6. Actionneur rotatif selon l'une des revendications 1 à 5, **caractérisé e**n ce que les bielles (4, 5) en forme d'une bielle extérieure creuse et d'une bielle intérieure sont arrangées de manière coaxiale l'une par rapport à l'autre et que le bloc de mouvement (6) en forme de cylindre creux est prévu entre et de manière coaxiale aux bielles (4, 5), le filet de la bielle extérieure creuse étant agencé comme un filet intérieur et le filet de la bielle intérieure étant agencé comme un filet extérieur et le bloc de mouvement (6) comportant un filet extérieur qui engage dans le filet intérieur de la bielle extérieure et un filet intérieur qui engage dans le filet extérieur de la bielle intérieure.

7. Actionneur rotatif selon la revendication 6, **caractérisé en ce que** le guide (7) comporte d'au moins un bâton profilé (17) qui est passé au travers du bloc de mouvement (6) de manière écartée et parallèlement par rapport à l'axe longitudinal et dont au moins l'une extrémité et reliée de manière fixe aux parties de la boîte de l'actionneur rotatif (1).

8. Actionneur rotatif selon la revendication 7, **caractérisé en ce que** le bâton profilé (17) comporte d'au moins une nervure de renforcement (20) s'étendant dans la direction de déformation.

9. Actionneur rotatif selon l'une des revendications 1 à 8, **caractérisé e**n ce que la transmission de la force motrice (3) comporte un élément d'accouplement (13) par lequel la bielle de transmission de couple (5) est reliée à une partie qui doit être tournée.

10. Actionneur rotatif selon l'une des revendications 1 à 9, **caractérisé e**n ce que le bloc de mouvement (6) comporte d'au moins un capteur pour la limitation la distance de mouvement du bloc de mouvement (6).
